# FASCICULE DE BREVET EUROPEEN

(11) **EP 2 620 675 B1**
(45) Date de publication et mention de la délivrance du brevet: **24.12.2014**
(21) Numéro de dépôt: 13153178.2
(22) Date de dépôt: 30.01.2013
(51) Int. Cl.: F16H 61/4035, F16H 61/4183, F01C 1/04, F03C 1/24

(54) **Crabotage désynchronisé d'un appareil hydraulique**
Desynchronisierte Aktivierung eines hydraulischen Geräts
Desynchronised coupling of a hydraulic apparatus

(30) Priorité: 30.01.2012 FR 1250849
(43) Date de publication de la demande: 31.07.2013
(73) Titulaire: Poclain Hydraulics Industrie, 60410 Verberie (FR)
(72) Inventeur: Prigent, André, 60410 VERBERIE (FR); Lambey, Julien, 60410 VERBERIE (FR)
(74) Mandataire: Regimbeau

(56) Documents cités:
- EP-A1- 2 241 530
- FR-A1- 2 784 335
- FR-A1- 2 958 886
- US-A1- 2009 241 530

## Description

### DOMAINE TECHNIQUE GENERAL

La présente invention concerne les circuits hydrauliques comprenant une pompe et/ou un moteur hydraulique, et s'applique plus particulièrement aux transmissions munies d'une transmission hydraulique additionnelle, dans lesquels la pompe ou le moteur hydraulique doit être enclenché pendant sa rotation.

### ETAT DE L'ART

On connaît les véhicules hybrides, munis d'une transmission principale mécanique et d'une transmission hydraulique additionnelle qui est sollicité dans des conditions d'utilisation particulières du véhicule.

Dans l'ensemble du présent texte, on désignera par appareil hydraulique un appareil pouvant fonctionner en tant que moteur ou que pompe hydraulique, et étant par exemple piloté au moyen de l'inclinaison d'un plateau de commande dudit appareil hydraulique. Un appareil hydraulique comprend de manière conventionnelle une pluralité de pistons disposés dans des logements, et effectuant des mouvements de va et vient au contact d'une came.

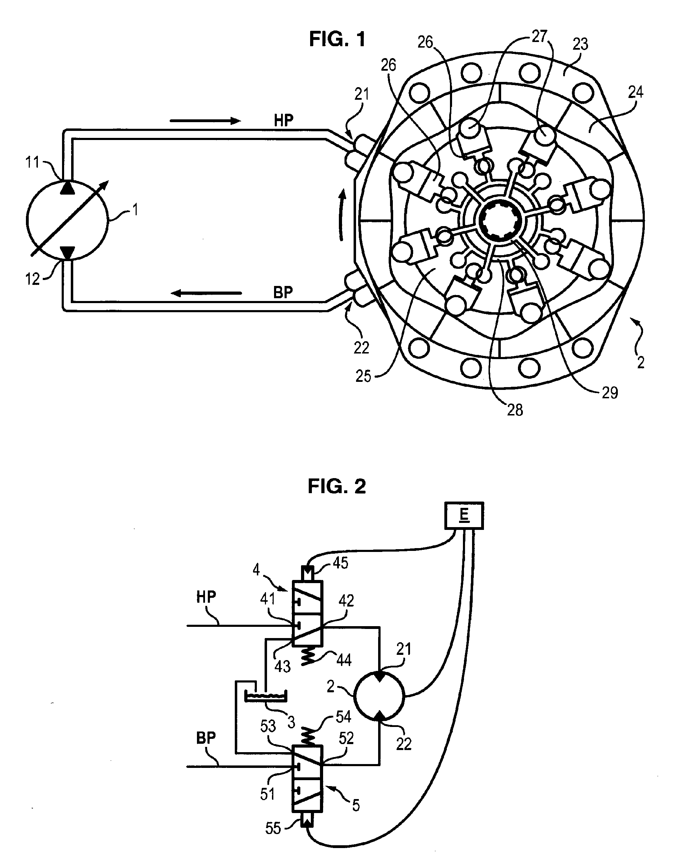

La figure 1 présente un exemple d'appareil hydraulique, en l'occurrence un moteur hydraulique 2 alimenté en pression par une pompe hydraulique 1.
Afin d'en illustrer le fonctionnement, on représente le sens de circulation du fluide par des flèches ; et on définit ainsi une ligne haute pression HP reliant un premier orifice 11 ou refoulement de la pompe hydraulique 1 à un premier orifice 21 ou admission du moteur hydraulique 2, et une ligne basse pression BP reliant un second orifice 22 ou refoulement du moteur hydraulique 2 à un second orifice 12 ou admission de la pompe hydraulique 1. On comprend bien que dans le cas d'un appareil hydraulique réversible, le fonctionnement en sens inverse est également possible.
Le moteur hydraulique 2 tel que présenté comprenant un carter 23, une came 24, un rotor 25 présentant une pluralité de logements 26 dans lesquels sont disposés des pistons 27, lesdits pistons étant ici disposés radialement par rapport à l'axe de rotation du rotor 25.
Le rotor 25 est associé à des conduits d'alimentation aménagés dans un distributeur fixe par rapport au carter 23 et à la came 24, reliés respectivement au premier orifice 21 et au second orifice 22 du moteur hydraulique 2. On les désignera respectivement par conduit haute pression 28 et conduit basse pression 29. Chacun de ces conduits présente une pluralité de canaux adaptés pour être reliés aux logements 26 du rotor 25. On connaît également des moteurs avec carter tournant, fonctionnant selon un principe similaire.
Afin d'illustrer un mode de fonctionnement de l'appareil hydraulique, on représente sur la figure 1 le sens de rotation du rotor 25 par une flèche sur la figure 1, cette rotation mettant en vis-à-vis les logements 26 avec les conduits haute pression 28 ou basse pression 29 du distributeur, ce qui provoque respectivement la sortie des pistons 27 de leur logement 28, ou leur rentrée tout en restant au contact de la came 24, et correspond au profil de la came 24 de sorte que les pistons 27 soient maintenus au contact de la came 24. Dans le cas d'un moteur réversible, le fonctionnement en sens inverse est bien entendu possible. Plus précisément, la came 24 présente des sommets et des creux, les sommets correspondant à la position dans laquelle les pistons 27 réalisent un déplacement minimum à partir de leur logement 28 tandis que les creux correspondent à la position dans laquelle les pistons 27 réalisent un déplacement maximum à partir de leur logement 28.. La portion de came allant d'un sommet à un creux est la portion correspondant à une sortie des pistons 27 sous l'effet de l'alimentation par un conduit haute pression 28, tandis que la portion de came allant d'un creux à un sommet est la portion de came correspond à un retour des pistons 27, et donc un refoulement de fluide via le conduit basse pression 29.

On connaît les appareils hydrauliques présentant une configuration de roue libre, c'est-à-dire une configuration dans laquelle l'appareil hydraulique fonctionne sans pression de fluide et où les pistons ne sont pas en contact avec la came, une telle configuration étant par exemple avantageuse sur des engins ayant des conditions de travail mixtes. A cette configuration de roue libre s'oppose la configuration de travail, dans laquelle les pistons sont au contact de la came, et l'appareil hydraulique fonctionne avec une pression de fluide.

La transmission hydraulique additionnelle comprend ainsi typiquement un appareil hydraulique qui est en configuration de roue libre lorsque la transmission hydraulique additionnelle n'est pas sollicitée, et passe en configuration de travail lorsqu'elle est sollicitée.
Ce passage de la configuration de roue libre à la configuration de travail est réalisé par une sortie des pistons, qui sont amenés au contact de la came, ou plus précisément leurs extrémités libres sont placées au contact de la came. Ce passage de la configuration de roue libre à la configuration de travail est communément appelé crabotage.

Cette sortie des pistons doit cependant s'effectuer dans des conditions spécifiques, afin de ne pas endommager l'appareil hydraulique, et plus particulièrement de dégrader les extrémités libres des pistons et la came.
Dans des systèmes antérieurs, il est nécessaire de réduire considérablement voire d'arrêter le moteur de la transmission principale du véhicule avant de solliciter la transmission hydraulique additionnelle, et donc de passer l'appareil hydraulique en configuration de travail afin d'éviter une telle dégradation de l'appareil hydraulique, ce qui est contraignant en termes d'utilisation.

Des améliorations ont été apportées à de tels systèmes, afin de permettre un passage de la configuration de roue libre à la configuration de travail de l'appareil hydraulique dans de meilleures conditions, par exemple dans le document FR 2784335.
Ce document présente un système réalisant un passage de la configuration de roue libre à la configuration de travail en plusieurs étapes, comprenant :
- une phase d'initiations dans laquelle le carter de l'appareil hydraulique est mis sous pression par une pompe hydraulique, tandis que les deux orifices de l'appareil hydrauliques sont mis à une même pression, inférieure à ladite pression du carter, puis
- une phase d'embrayage, dans laquelle dans un premier temps les deux orifices de l'appareil hydraulique sont reliés à l'admission et au refoulement d'une pompe hydraulique, puis dans un deuxième temps le carter de l'appareil hydraulique est mis à pression ambiante.
Un tel système, bien que permettant d'assouplir les conditions requises pour le passage en configuration de travail de l'appareil hydraulique, ne permet pas un contrôle précis de la sortie des pistons, ce qui peut fonctionner correctement à un certain point de fonctionnement, mais entrainer un crabotage bruyant à d'autres conditions de vitesse de roulage. Cette solution entraine également des augmentations importantes de pression temporaires dans le carter des moteurs pendant la phase de crabotage.
Le document FR 2958886 présente un système amélioré permettant de réaliser un passage de la configuration de roue libre à la configuration de travail par application d'une pression dans le carter du moteur. Un tel système est toutefois contraignant en ce qu'il nécessite une pompe dédiée, et présente un unique point de fonctionnement avec une pression et une vitesse donnée. Il est donc nécessaire d'avoir un pilotage adapté de la pompe hydraulique dédiée, et un tel système ne peut pas fonctionner dans le cas d'une pompe liée à une transmission principale d'un véhicule.
Le document US 2009/0241530 A divulgue un circuit hydraulique selon le préambule de la revendication 1.

L'invention vise donc à proposer un système permettant de craboter de manière progressive et silencieuse un appareil hydraulique, alimenté par des moyens ne pouvant pas être pilotés de manière dédiée, par exemple une pompe à cylindrée fixe, une pompe à cylindrée variable reliée à une transmission, ou des accumulateurs.

### PRESENTATION DE L'INVENTION

La présente invention vise à proposer un système ne présentant pas de tels inconvénients, et propose un circuit hydraulique comprenant :
- une ligne haute pression et une ligne basse pression, la pression dans ladite ligne haute pression étant supérieure à la pression dans ladite ligne basse pression,
- un appareil hydraulique présentant deux orifices adaptés pour être reliés auxdites lignes haute pression et basse pression, un premier desdits orifices étant un orifice d'admission de fluide hydraulique et le second desdits orifices étant un orifice de refoulement de fluide hydraulique,
ledit circuit comprenant des moyens de connexion séquentiels, adaptés pour relier séquentiellement lesdits orifices de l'appareil hydraulique auxdites lignes haute et basse pression.

Selon un mode de réalisation particulier, ledit circuit comprend en outre un réservoir à pression ambiante, dans lequel lesdits moyens de connexion comprennent au moins une valve de sélection adaptée pour relier de manière sélective lesdits orifices d'admission et de refoulement dudit appareil hydraulique
- aux lignes haute et basse pression,
- au réservoir.

Selon un autre mode de réalisation particulier, ledit appareil hydraulique est un appareil hydraulique à pistons radiaux, et lesdits moyens de connexion séquentiels comprennent au moins un distributeur adapté pour, lors d'un premier déplacement, raccorder l'admission dudit appareil hydraulique à la ligne haute pression, et lors d'un second déplacement, raccorder le refoulement dudit appareil hydraulique à la ligne basse pression.
Le circuit comprend en outre une ligne de pilotage dont la pression est inférieure à la pression dans la ligne basse pression, et dans lequel les moyens de connexion sont également adaptés pour relier de manière sélective lesdits orifices dudit appareil hydraulique à la ligne de pilotage.

Selon une première variante, lequel lesdites lignes haute et basse pression sont reliées respectivement au refoulement et à l'admission d'une pompe hydraulique et la ligne de pilotage est alimentée par une pompe de pilotage, lesdits moyens de connexion comprenant
- des moyens de connexion de l'appareil hydraulique, et
- un distributeur d'alimentation,
le distributeur d'alimentation étant adapté pour relier de manière sélective la pompe de pilotage ou l'admission et le refoulement de la pompe hydraulique aux moyens de connexion de l'appareil hydraulique, lesdits moyens de connexion de l'appareil hydraulique étant adaptés pour relier l'admission et le refoulement dudit appareil hydraulique de manière sélective au distributeur d'alimentation ou à un réservoir à pression ambiante.

Selon une seconde variante, ladite ligne haute pression est reliée à un accumulateur haute pression et ladite ligne basse pression est reliée à un accumulateur basse pression, et la ligne de pilotage est alimentée par un accumulateur de pilotage, lesdits moyens de connexion comprenant
- des moyens de connexion de l'appareil hydraulique, et
- un distributeur d'alimentation,
le distributeur d'alimentation étant adapté pour relier de manière sélective lesdits accumulateurs haute pression et basse pression ou l'accumulateur de pilotage aux moyens de connexion de l'appareil hydraulique,
lesdits moyens de connexion de l'appareil hydraulique étant adaptés pour relier l'admission et le refoulement dudit appareil hydraulique de manière sélective au distributeur d'alimentation ou à un réservoir à pression ambiante.

Selon un mode de réalisation particulier de ces variantes, lesdits moyens de connexion de l'appareil hydraulique comprennent un premier et un second distributeur,
- ledit premier distributeur étant adapté pour, dans une première configuration, relier l'admission de l'appareil hydraulique à un réservoir à pression ambiante, et dans une seconde configuration, relier l'admission de l'appareil hydraulique au distributeur d'alimentation,
- ledit second distributeur étant adapté pour, dans une première configuration, relier le refoulement de l'appareil hydraulique à un réservoir à pression ambiante, et dans une seconde configuration, relier le refoulement de l'appareil hydraulique au distributeur d'alimentation.

Selon un autre mode de réalisation particulier desdites variantes, lesdits moyens de connexion comprennent un distributeur adapté pour,
- dans une première configuration, relier l'admission et le refoulement dudit appareil hydraulique à un réservoir à pression ambiante,
- dans une deuxième configuration, relier l'admission dudit appareil hydraulique au distributeur d'alimentation, et le refoulement dudit appareil hydraulique à un réservoir à pression ambiante,
- dans une troisième configuration, relier l'admission dudit appareil hydraulique au distributeur d'alimentation et le refoulement dudit appareil hydraulique audit distributeur d'alimentation.

L'invention concerne également un procédé de pilotage d'un appareil hydraulique à pistons radiaux, ledit procédé comprenant les étapes suivantes :
- mise de l'admission de l'appareil hydraulique à une première pression,
- exécution d'une temporisation correspondant à une portion de tour dudit appareil hydraulique,
- mise du refoulement de l'appareil hydraulique à une seconde pression, égale à ladite première pression, et
- mise de l'admission et du refoulement de l'appareil hydraulique à des pressions distinctes.

Dans le procédé , pour un appareil hydraulique comprenant un rotor et une came présentant n sommets, ladite temporisation est typiquement adaptée pour permettre la sortie de l'ensemble des pistons de leurs logements.

L'invention permet ainsi d'obtenir un crabotage progressif, dont l'impact sur la durée de vie de l'appareil hydraulique est fortement réduit, et également plus silencieux, sans nécessiter une pompe ou un moyen d'alimentation en pression dédié.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- la figure 1 décrite précédemment illustre un exemple de vue en coupe d'un appareil hydraulique à pistons radiaux ;
- la figure 2 présente un exemple de circuit hydraulique;
- les figures 3 à 7 présentent des variantes et applications particulières selon l'invention du circuit hydraulique présenté sur la figure 2 ;
- la figure 8 représente schématiquement un procédé selon un aspect de l'invention.

Dans l'ensemble des figures, les éléments identiques sont repérés par les mêmes références numériques.

### DESCRIPTION DETAILLEE

La figure 2 illustre schématiquement un exemple de circuit hydraulique.

Le circuit hydraulique représenté comprend une ligne haute pression HP, une ligne basse pression BP, un moteur hydraulique 2 et un réservoir 3. On comprend bien que l'invention n'est pas limitée à un circuit hydraulique comprenant un unique moteur hydraulique, et s'applique notamment à des circuits d'assistance comprenant un ou plusieurs moteurs hydrauliques.
Le moteur hydraulique 2 est typiquement un moteur hydraulique à pistons radiaux, de tels moteurs étant bien connus de l'état de l'art et illustré sur la figure 1 décrite précédemment. Pour la suite de la description et afin d'illustrer le fonctionnement de l'invention, nous ferons référence à un moteur hydraulique tel que présenté sur la figure 1. De manière plus générale, l'invention s'applique aux systèmes devant être crabotés. Le moteur hydraulique 2 comprend deux orifices ; respectivement un premier orifice 11 et un second orifice 12 permettant l'alimentation et le refoulement de fluide.
Dans le mode de réalisation représenté, dans lequel le premier orifice 21 est relié à la ligne haute pression HP et le second orifice 22 est relié à la ligne basse pression BP, le premier orifice 21 correspond à l'admission du moteur hydraulique 2, tandis que son second orifice 22 correspond à son refoulement.
Le fonctionnement en sens inverse est également possible, en inversant les lignes haute pression HP et basse pression BP selon le même principe que le fonctionnement décrit ci-après.

On comprend bien ici que la dénomination « haute pression » et la dénomination « basse pression » sont des dénominations relatives ; la ligne haute pression HP est une ligne du circuit hydraulique dans laquelle la pression est plus élevée que la pression dans la ligne basse pression BP.

Le circuit tel que représenté comprend deux distributeurs, 4 et 5, permettant de relier respectivement de manière sélective :
- le premier orifice 21 du moteur 2 à la ligne haute pression HP ou au réservoir 3 ; et
- le second orifice 22 du moteur 2 à la ligne basse pression BP ou au réservoir 3.
Dans le mode de réalisation représenté, chacun des distributeurs 4 et 5 comprend respectivement :
- un premier orifice, respectivement 41 et 51, reliés respectivement à la ligne haute pression HP et à la ligne basse pression BP, un deuxième orifice, respectivement 42 et 52, reliés respectivement au premier orifice 21 et au second orifice 22 du moteur 2,
- un troisième orifice, respectivement 43 et 53, reliés au réservoir 3.
Chacun des distributeurs 4 et 5 alterne entre deux configurations :
- une première configuration dans laquelle le premier orifice 41 ou 51 est obturé tandis que le deuxième orifice 42 ou 52 est relié au troisième orifice 43 ou 53, et
- une deuxième configuration dans laquelle le premier orifice 41 ou 51 est relié au deuxième orifice 42 ou 52, tandis que le troisième orifice 43 ou 53 est obturé.
Les distributeurs 4 et 5 sont munis de moyens permettant de piloter leur déplacement entre ces deux configurations, à savoir un moyen de rappel, respectivement 44 et 54, typiquement des moyens de rappels élastiques ou une commande hydraulique ou électrique, et une commande, respectivement 45 et 55, typiquement hydraulique ou électrique. Dans le mode de réalisation représenté, les commandes 45 et 55 sont des commandes hydrauliques, et les moyens de rappel élastiques sont des ressorts 44 et 54, qui maintiennent par défaut (c'est-à-dire en l'absence d'application d'un effort par les commandes 45 et 55) lesdits distributeurs dans leur première configuration telle que décrite ci-dessus.
Les commandes 45 et 55 permettent de déplacer respectivement les distributeurs 4 et 5 de leur première vers leur deuxième configuration.

Le moteur hydraulique 2 est initialement relié au réservoir 3 via ses deux orifices 21 et 22. Le moteur hydraulique 2 est alors en configuration de roue libre ; ses pistons sont en position « rentrée » et ne viennent pas au contact de la came.
Si l'on souhaite solliciter le moteur hydraulique 2, par exemple dans le cas d'une assistance hydraulique, on va le craboter, c'est-à-dire faire sortir ses pistons de leurs logements afin qu'ils viennent au contact de la came.
Dans un premier temps, on pilote le premier distributeur 4 au moyen de sa commande 45, afin de relier le premier orifice 21 du moteur hydraulique 2 à la ligne haute pression HP du circuit hydraulique représenté.
Relier ainsi le premier orifice 21 du moteur hydraulique 2 la ligne haute pression HP entraine une sortie des pistons du moteur hydraulique 2, au fur et à mesure qu'ils sont poussés par une haute pression.

Ainsi, si l'on se réfère au circuit tel que présenté sur la figure 2, en partant d'une configuration initiale d'un moteur hydraulique 2 en roue libre, c'est-à-dire une configuration dans laquelle les pistons 27 sont rentrés dans leurs logements 26, en reliant dans une première étape le premier orifice 21 du moteur hydraulique 2 à la ligne haute pression HP au moyen du premier distributeur 4, tandis que le second orifice 22 du moteur hydraulique 2 est relié à un réservoir à pression atmosphérique, seuls les pistons 27 dont le logement 26 est relié au conduit haute pression 28 sortent de leur logement 26.
Ainsi, lors de la connexion de la ligne haute pression HP, seule une partie des pistons sortent de leur logement.
De manière avantageuse, les canaux du conduit haute pression 28 adaptés pour être reliés aux logements 26 du rotor 25 sont disposés sensiblement pour que leur ouverture commence en vis-à-vis des sommets de la came 24, et donc des positions dans lesquelles le déplacement des pistons 27 de leur position rentrée jusqu'au contact avec la came 24 est réduit, ce qui limite ainsi la force de l'impact lors de cette mise au contact entre les pistons 27 et la came 24, et par conséquent l'usure des pistons 27 et de la came 24, ainsi que le bruit provoqué par cette mise au contact. On a donc un premier ensemble de pistons alimentés pour la première fois.
Ensuite, on alimente successivement d'autres pistons pour la première fois ; la rotation du rotor 25 relie progressivement les logements 26 dans lesquels sont disposés les pistons 27 restants au conduit haute pression 28, provoquant leur sortie progressive au fur et à mesure de la rotation du rotor 25.
Après une temporisation, qui correspond à une portion de tour effectuée par le rotor 25, on relie le second orifice 22 du moteur hydraulique 2 au second orifice 12 de la pompe hydraulique 1 au moyen du second distributeur 5, c'est-à-dire la ligne basse pression BP.
La connexion de l'admission 21 et du refoulement 22 de l'appareil hydraulique 2, ici un moteur hydraulique, est donc réalisée séquentiellement via deux déplacements successifs des moyens de connexion 4 et 5.

Cette temporisation est typiquement réalisée par une unité de commande E, telle qu'un calculateur, qui est avantageusement adapté pour déterminer ladite temporisation en fonction des caractéristiques du moteur hydraulique 2 et de sa vitesse de rotation, de manière à permettre à l'ensemble des pistons 27 de sortir de leurs logements 26. On réalise ainsi une sortie progressive des pistons 27, c'est-à-dire un crabotage progressif du moteur hydraulique 2. En effet, la sortie des pistons 27 et leur mise au contact de la came 24 est réalisée progressivement en ce que seule une partie des pistons 27 est mise au contact de la came 24 lors de la connexion de l'admission 21 du moteur hydraulique 2 à la ligne haute pression HP, et les pistons 27 restants sont mis au contact de la came 24 progressivement, au fur et à mesure de la rotation du rotor 25. En outre, le crabotage est également progressif en ce que le refoulement 22 du moteur hydraulique 2 est initialement relié au réservoir 3 pression ambiante ou atmosphérique, et le retour des pistons 27 lors de leur déplacement entre un creux et un sommet de la came 24 s'effectue donc sans à-coup.

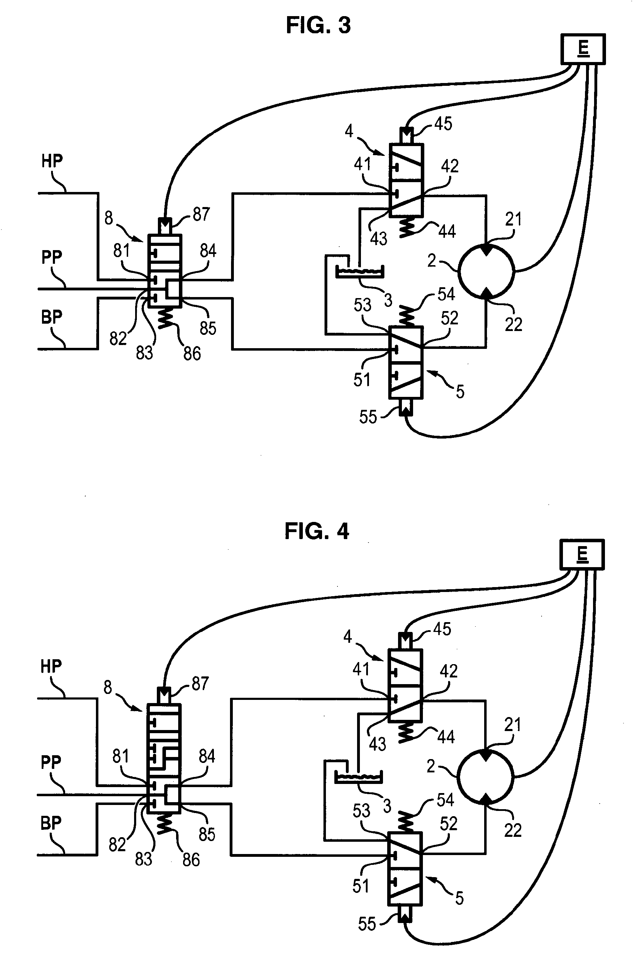

La figure 3 présente une variante du circuit hydraulique de la figure 2. Dans ce mode de réalisation, le circuit comprend en outre une ligne de pilotage PP, dont la pression de pilotage est inférieure ou égale à la pression de la ligne basse pression BP.
Les éléments communs à la figure 2 sont repérés par les mêmes références numériques, et ne seront pas repris en détail ici.

Dans ce mode de réalisation, un distributeur d'alimentation 8 assure la liaison entre d'une part les lignes haute pression, basse pression et de pilotage HP, BP et PP, et d'autre part les premiers orifices 41 et 51 des distributeurs 4 et 5.
Plus précisément, le distributeur d'alimentation 8 comprend :
- un premier orifice 81 relié au à la ligne haute pression HP,
- un deuxième orifice 82 relié à la ligne de pilotage PP,
- un troisième orifice 83 relié à la ligne basse pression BP,
- un quatrième orifice 84 relié au premier orifice 41 du distributeur 1,
- un cinquième orifice 85 relié au premier orifice 51 du distributeur 5.

Ce distributeur 8 est piloté par une commande 87 à laquelle s'oppose un moyen élastique 86, de manière à alterner entre deux configurations :
- une première configuration dans laquelle le premier orifice 81 et le troisième orifice 83 sont obstrués, tandis que le deuxième orifice 82 est relié au quatrième orifice 84 et au cinquième orifice 85, et
- une seconde configuration dans laquelle le premier orifice 81 est relié au quatrième orifice 84, le deuxième orifice 82 est obstrué et le troisième orifice 83 est relié au cinquième orifice 85.
Par conséquent, dans sa première configuration, le distributeur 8 relie la ligne de pilotage PP aux premiers orifices 41 et 51 des distributeurs 4 et 5. Dans sa seconde configuration, le distributeur 8 relie le premier orifice 41 du distributeur 4 à la ligne haute pression HP, et le premier orifice 51 du distributeur 5 à la ligne BP.
Le distributeur 8 est maintenu par défaut dans sa première configuration du fait de l'action du moyen élastique 86, et la commande 87 est adaptée pour le déplacer vers sa seconde configuration.

En fonctionnement, le moteur hydraulique 2 est par défaut dans une configuration de roue libre, et ses deux orifices sont reliés au réservoir 3.
Lors d'une première étape, on pilote le déplacement du distributeur 4, de manière à relier l'admission 21 du moteur hydraulique 2 au quatrième orifice 84 du distributeur 8, qui relie donc l'admission 21 du moteur hydraulique 2 à la ligne de pilotage PP.
L'admission 21 du moteur hydraulique est ainsi reliée à la ligne de pilotage PP, tandis que son refoulement 22 est relié au réservoir à pression ambiante ou atmosphérique 3.
On provoque ainsi une sortie des pistons 27 de leurs logements 26 du fait de cette pression dans la ligne de pilotage PP qui est appliquée dans les logements 26 reliés au conduit haute pression 28.
Lors d'une deuxième étape, qui est réalisée après qu'une première temporisation soit effectuée après la première étape, on pilote le déplacement du distributeur 5 de manière à relier le refoulement du moteur hydraulique 2 au cinquième orifice 85 du distributeur 8, qui relie donc le refoulement 22 du moteur hydraulique 2 à la ligne de pilotage PP.
On se trouve donc dans le mode « By-pass », le moteur aspire ce qu'il refoule à une pression identique sur l'alimentation et le refoulement, et ne génère pas de couple.
Enfin, lors d'une troisième étape, qui est réalisée après qu'une seconde temporisation soit effectuée après la deuxième étape, on pilote le déplacement du distributeur 8, de manière à relier la ligne haute pression HP et la ligne basse pression BP respectivement à l'admission 21 et au refoulement 22 du moteur hydraulique 2, afin de faire passer le moteur hydraulique 2 dans sa configuration de travail.

Par rapport au fonctionnement du mode de réalisation présenté sur la figure 2, le fonctionnement de ce mode de réalisation particulier intègre donc une étape supplémentaire dans la mesure où l'admission 21 et le refoulement 22 du moteur hydraulique 2 sont dans un premier temps reliés à la ligne de pilotage PP avant d'être reliés aux lignes haute pression HP et basse pression BP, ce qui permet un crabotage du moteur hydraulique 2 sans être influencé par le niveau de pression dans les lignes haute et basse pression HP et BP, et permet donc d'éviter tout risque d'écrouler la pression dans les lignes HP et BP, ou de générer une sortie trop violente des pistons en cas de pression élevée.

La figure 4 présente une variante du circuit présenté sur la figure 3, dans lequel le distributeur 8 présente une troisième configuration, intermédiaire entre les deux configurations présentées en référence à la figure 3, dans laquelle les premier et second orifices 81 et 82 du distributeur d'alimentation 8 sont obstrués, tandis que le troisième orifice 83 est relié aux quatrième et cinquième orifices 84 et 85.
Ainsi, on définit un passage progressif en reliant d'abord les deux orifices 21 et 22 du moteur hydraulique 2 à la ligne de pilotage PP, puis à la ligne basse pression BP avant d'en relier l'admission à la ligne haute pression HP, c'est-à-dire en reliant séquentiellement les orifices 21 et 22 du moteur hydraulique 2 aux lignes de pilotage PP, basse pression BP et haute pression HP.

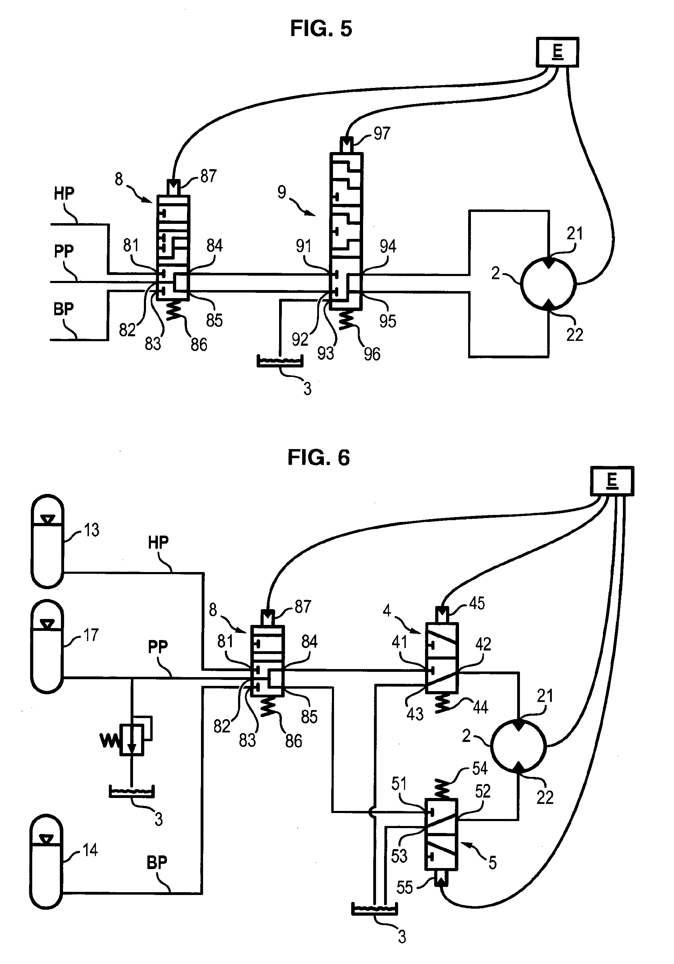

La figure 5 illustre une variante du circuit représenté sur la figure 4, dans laquelle les distributeurs 4 et 5 sont remplacés par un distributeur unique 9 adapté pour réaliser la même fonction.
Le distributeur 9 tel que représenté comprend cinq orifices, et alterne entre trois configurations du fait de l'action d'une commande 97 à laquelle s'oppose un moyen de rappel élastique 96.
Les cinq orifices 91, 92, 93, 94 et 95 sont configurés comme suit :
- le premier orifice 91 est relié au quatrième orifice 84 du distributeur 8 ;
- le deuxième orifice 92 est relié au cinquième orifice 85 du distributeur 8 ;
- le troisième orifice 93 est relié au réservoir 3 ;
- le quatrième orifice 94 est relié à l'admission 21 du moteur hydraulique 2 ;
- le cinquième orifice 95 est relié au refoulement 22 du moteur hydraulique 2.
Les trois configurations du distributeur 9 sont comme suit :
- dans une première configuration, les premier 91 et deuxième 92 orifices sont obstrués, et le troisième orifice 93 est relié aux quatrième 94 et cinquième 95 orifices ;
- dans une deuxième configuration, le premier orifice 91 est relié au quatrième orifice 94, le deuxième orifice 92 est obstrué, et le troisième orifice 93 est relié au cinquième orifice 95 ;
- dans une troisième configuration, le premier orifice est relié au quatrième orifice 94, le deuxième orifice 92 est relié au cinquième orifice 95, et le troisième orifice 93 est obstrué.
Ainsi, en basculant le distributeur de la première configuration vers la deuxième configuration, on obtient un effet identique au pilotage du distributeur 4 présenté sur la figure 3. Ensuite, en basculant le distributeur 9 de la deuxième vers la troisième configuration, on obtient un effet identique au pilotage du distributeur 5 présenté sur la figure 3.

Cette variante est avantageuse en termes d'encombrement ; l'utilisation d'un unique distributeur 9 en lieu et place des deux distributeurs 4 et 5 permet d'obtenir un encombrement réduit, et ainsi d'en faciliter l'intégration.

La figure 6 illustre une variante du circuit représenté sur la figure 3, dans laquelle les lignes haute pression HP, basse pression BP et de pilotage PP sont alimentées respectivement par un accumulateur haute pression 13, un accumulateur basse pression 14 et un accumulateur de pilotage 17
Le fonctionnement de cette variante est identique au fonctionnement de la variante présentée sur la figure 2 ; la fonction d'alimentation en pression étant ici assurée par les accumulateurs 13, 14 et 17.

La terminologie d'accumulateurs « haute pression » et « basse pression » renvoie à la fonction de ces accumulateurs ; l'accumulateur haute pression étant adapté pour alimenter le moteur hydraulique 2 lors de son fonctionnement en tant que moteur, et à être chargé par ce dernier lors de son fonctionnement en tant que pompe comme on le décrit ci-après.

L'utilisation d'accumulateurs pour réaliser l'alimentation en pression du moteur hydraulique 2 permet de réaliser un circuit dit « regen », permettant de récupérer de l'énergie lors du freinage, et de la restituer lors de l'accélération. En outre, les circuits avec accumulateurs présentent les mêmes problématiques que les circuits avec pompe hydraulique en boucle fermée, à savoir la recherche d'un crabotage silencieux des pistons et qui n'endommage pas le moteur. L'invention permet également de répondre à ces problématiques pour des circuits munis d'accumulateurs.

On décrit le fonctionnement d'un tel circuit « regen » en référence à la figure 6.
Lors d'une accélération sollicitant l'assistance hydraulique, le moteur hydraulique 2 doit craboter ; on relie donc dans un premier temps l'accumulateur de pilotage 17 successivement à l'admission 21 du moteur hydraulique 2 puis à son refoulement 22 afin de réaliser un crabotage contrôlé comme décrit précédemment.
Une fois ce crabotage effectué, on relie l'admission 21 et le refoulement 22 du moteur hydraulique 2 respectivement à l'accumulateur haute pression 13 et à l'accumulateur basse pression 14.
Le moteur hydraulique 2 est alors alimenté par l'accumulateur haute pression 13, et remplit l'accumulateur basse pression 14.
Lors du freinage, le moteur hydraulique 2 est également craboté, mais il fonctionne alors en pompe ; il prélève du fluide dans l'accumulateur basse pression 14 et charge l'accumulateur haute pression 13.
On comprend bien qu'ainsi, le freinage permet d'accumuler du fluide dans l'accumulateur haute pression 13, et ainsi le charger afin d'exploiter cette charge lors des phases ultérieures d'accélération.
L'accumulateur de pilotage 17 est avantageusement choisi de manière à ce que son volume soit suffisant pour assurer la sortie de tous les pistons 27 de leur logement 26 avec une pression suffisante, c'est-à-dire pour donner un débit compatible avec la vitesse maximale prédéterminée du véhicule pour un crabotage.

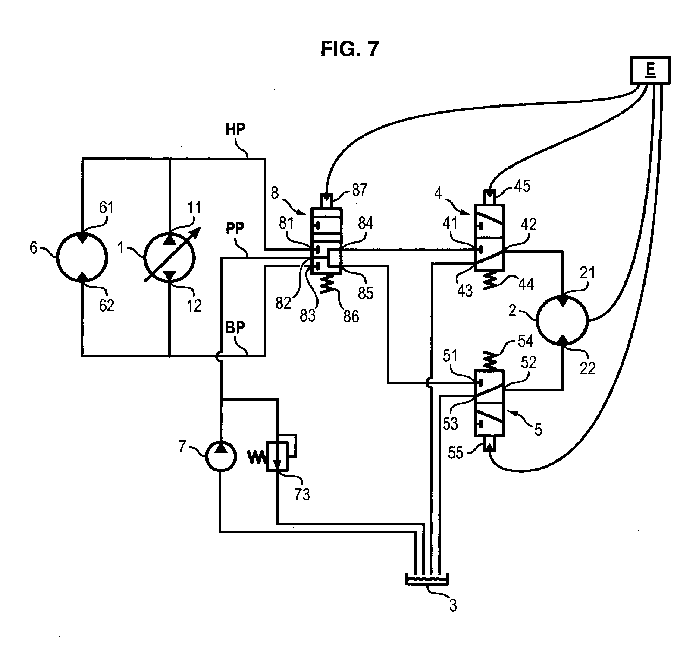

La figure 7 illustre une variante du circuit représenté sur les figures 3 et 6, dans laquelle les lignes haute pression HP, basse pression BP et de pilotage PP sont reliées à des pompes hydrauliques.
Dans cette variante, les lignes haute pression HP et basse pression BP sont reliées respectivement au refoulement 11 et à l'admission 12 d'une pompe hydraulique 1.

Dans la variante représentée, la pompe hydraulique 1 alimente un second moteur hydraulique 6, similaire au moteur hydraulique 2 présenté précédemment et présentant ainsi deux orifices, respectivement 61 et 62 reliés respectivement au premier et au second orifice 11 et 12 de la pompe hydraulique 1.
A titre d'exemple, le second moteur hydraulique 6 correspond typiquement à la transmission principale d'un véhicule, tandis que le premier moteur hydraulique 2 correspond typiquement à la transmission auxiliaire ou à l'assistance à la transmission.

La ligne de pilotage PP est reliée à une pompe de pilotage 7, et est munie d'une soupape 73 permettant d'en déverser le débit vers le réservoir 3 en cas de pression trop élevée dans la ligne de pilotage PP. Cette pompe de pilotage 7 est par exemple une pompe de gavage d'un circuit hydraulique réalisant le gavage dudit circuit.

Le fonctionnement est similaire à celui précédemment décrit en référence aux figures 3 et 6 ; le crabotage du moteur hydraulique 2 est réalisé au moyen de la pression de la ligne de pilotage PP, résultant ici du débit délivré par la pompe de pilotage 7, avant de relier le moteur hydraulique à la pompe hydraulique 1.

On comprend bien évidemment que l'on peut également envisager une telle variante avec des pompes hydrauliques aux circuits représentés sur les figures 4 et 5 ;

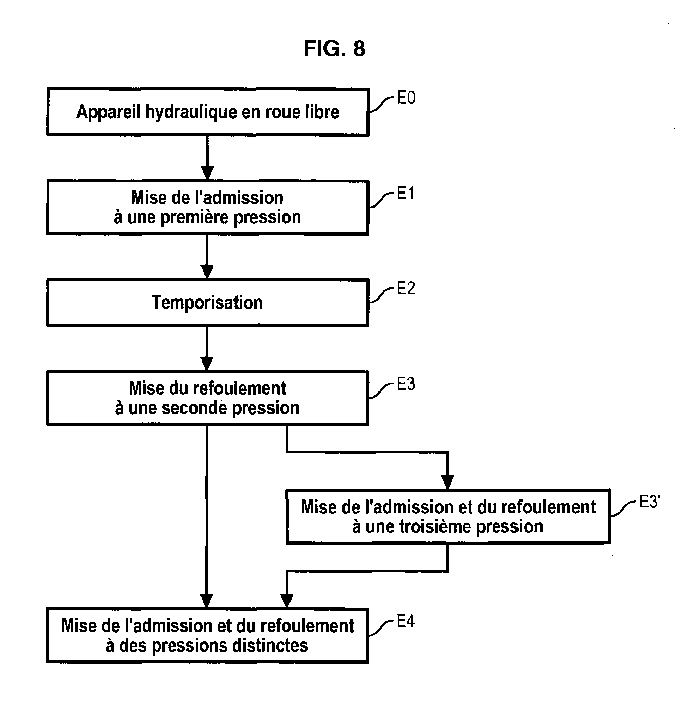

La figure 8 est une représentation schématique d'un procédé selon un aspect de l'invention.
L'étape E0 correspond à l'état initial du système, qui est en configuration de roue libre comme décrit précédemment, c'est-à-dire que l'appareil hydraulique a son refoulement et son admission reliés à un réservoir à pression ambiante ou atmosphérique, et que ses pistons sont rentrés dans ses logements de manière à ne pas venir au contact de la came.
Dans une première étape E1, l'admission de l'appareil hydraulique est mise à une première pression supérieure à ladite pression ambiante, typiquement une pression de pilotage PP comme décrit en référence aux exemples précédents. Suite à ce premier raccord de l'étape E1, on réalise une temporisation lors d'une étape E2, cette temporisation étant adaptée pour que la partir tournante de l'appareil hydraulique réalise une portion de tour, permettant à l'ensemble des pistons de sortir de leurs logements du fait de cette mise à une première pression de l'admission de l'appareil hydraulique .
Enfin, lors d'une étape E3, on réalise une mise à une seconde pression du refoulement de l'appareil hydraulique.

Comme cela a été décrit en référence aux figures précédentes, la source de pression à laquelle l'admission de l'appareil hydraulique est raccordée lors de l'étape E1 et la source de pression à laquelle le refoulement de l'appareil hydraulique est raccordé lors de l'étape E3 peuvent être identiques ou distinctes.

Dans le cas où ces sources de pression sont identiques, le procédé peut comprendre une étape ultérieure E4 de mise à des pressions distinctes de l'alimentation et du refoulement de l'appareil hydraulique à, typiquement en les reliant au refoulement et à l'admission d'une pompe hydraulique, ou à des accumulateurs haute et basse pression comme décrit précédemment en référence aux figures 3, 6 et 7.

De plus, comme on l'a décrit en référence aux figures 4 et 5, lorsque les première et seconde pressions sont identiques, le procédé peut comprendre une étape supplémentaire E3'entre les étapes E3 et E4, lors de laquelle l'admission et le refoulement de l'appareil hydrauliques sont mis à une troisième pression, supérieure à ladite première pression.
Comme décrit en référence aux figures 4 et 5, cela correspond par exemple à une mise à la pression de la ligne basse pression BP de l'admission et du refoulement du moteur hydraulique, suite aux mises initiales successives de l'admission et du refoulement du moteur hydraulique à la pression de la ligne de pilotage PP, avant de relier son admission à la ligne haute pression HP.
Cette étape supplémentaire permet de garantir une mise au contact des pistons avec la came dans des conditions de vitesse plus élevées.

## Revendications

1. Circuit hydraulique comprenant :
- une ligne haute pression (HP) et une ligne basse pression (BP), la pression dans ladite ligne haute pression (HP) étant supérieure à la pression dans ladite ligne basse pression (BP),
- un appareil hydraulique (2) présentant deux orifices (21, 22) adaptés pour être reliés auxdites lignes haute pression (HP) et basse pression (BP), un premier (21) desdits orifices étant un orifice d'admission de fluide hydraulique et le second (22) desdits orifices étant un orifice de refoulement de fluide hydraulique,
- des moyens de connexion (4, 5, 8, 9) séquentiels, adaptés pour relier séquentiellement lesdits orifices (21, 22) de l'appareil hydraulique (2) auxdites lignes haute (HP) et basse (BP) pression,
ledit circuit étant **caractérisé en ce qu'**il comprend en outre une ligne de pilotage (PP) dont la pression est inférieure à la pression dans la ligne basse pression (BP), les moyens de connexion (4, 5, 8, 9) étant également adaptés pour relier de manière sélective lesdits orifices (21, 22) dudit appareil hydraulique (2) à la ligne de pilotage (PP).

2. Circuit selon la revendication 1, comprenant en outre un réservoir (3) à pression ambiante, dans lequel lesdits moyens de connexion (4, 5, 8, 9) comprennent au moins une valve de sélection adaptée pour relier de manière sélective lesdits orifices d'admission (21) et de refoulement (22) dudit appareil hydraulique (2)
- aux lignes haute (HP) et basse (BP) pression,
- au réservoir (3).

3. Circuit selon l'une des revendications 1 ou 2, dans lequel ledit appareil hydraulique (2) est un appareil hydraulique à pistons radiaux, et lesdits moyens de connexion (4, 5, 8, 9) séquentiels comprennent au moins un distributeur (4, 9) adapté pour, lors d'un premier déplacement, raccorder l'admission (21) dudit appareil hydraulique (2) à la ligne haute pression (HP), et lors d'un second déplacement, raccorder le refoulement (22) dudit appareil hydraulique (2) à la ligne basse pression (BP).

4. Circuit selon l'une des revendications 1 à 3, dans lequel lesdites lignes haute (HP) et basse (BP) pression sont reliées respectivement au refoulement et à l'admission d'une pompe hydraulique (1) et la ligne de pilotage (PP) est alimentée par une pompe de pilotage (7), lesdits moyens de connexion comprenant
- des moyens de connexion de l'appareil hydraulique (4, 5, 9), et
- un distributeur d'alimentation (8),
le distributeur d'alimentation (8) étant adapté pour relier de manière sélective la pompe de pilotage (7) ou l'admission et le refoulement de la pompe hydraulique (1) aux moyens de connexion de l'appareil hydraulique,
lesdits moyens de connexion de l'appareil hydraulique (4, 5, 9) étant adaptés pour relier l'admission (21) et le refoulement (22) dudit appareil hydraulique (2) de manière sélective au distributeur d'alimentation (8) ou à un réservoir (3) à pression ambiante.

5. Circuit selon l'une des revendications 1 à 3, dans lequel ladite ligne haute pression (HP) est reliée à un accumulateur haute pression (13) et ladite ligne basse pression (BP) est reliée à un accumulateur basse pression (14), et la ligne de pilotage (PP) est alimentée par un accumulateur de pilotage (17), lesdits moyens de connexion comprenant
- des moyens de connexion de l'appareil hydraulique (4, 5, 9), et
- un distributeur d'alimentation (8),
le distributeur d'alimentation (8) étant adapté pour relier de manière sélective lesdits accumulateurs haute pression (13) et basse pression (14) ou l'accumulateur de pilotage (17) aux moyens de connexion de l'appareil hydraulique (4, 5, 9),
lesdits moyens de connexion de l'appareil hydraulique (4, 5, 9) étant adaptés pour relier l'admission (21) et le refoulement (22) dudit appareil hydraulique (2) de manière sélective au distributeur d'alimentation (8) ou à un réservoir (3) à pression ambiante.

6. Circuit selon l'une des revendications 4 ou 5, dans lequel lesdits moyens de connexion de l'appareil hydraulique comprennent un premier (4) et un second (5) distributeur,
- ledit premier distributeur (4) étant adapté pour, dans une première configuration, relier l'admission (21) de l'appareil hydraulique (2) à un réservoir (3) à pression ambiante, et dans une seconde configuration, relier l'admission (21) de l'appareil hydraulique (2) au distributeur d'alimentation (8),
- ledit second distributeur (5) étant adapté pour, dans une première configuration, relier le refoulement (22) de l'appareil hydraulique (2) à un réservoir (3) à pression ambiante, et dans une seconde configuration, relier le refoulement (22) de l'appareil hydraulique (2) au distributeur d'alimentation (8).

7. Circuit hydraulique selon l'une des revendications 4 ou 5, dans lequel lesdits moyens de connexion comprennent un distributeur (9) adapté pour,
- dans une première configuration, relier l'admission (21) et le refoulement (22) dudit appareil hydraulique (2) à un réservoir (3) à pression ambiante,
- dans une deuxième configuration, relier l'admission (21) dudit appareil hydraulique (2) au distributeur d'alimentation (8), et le refoulement (22) dudit appareil hydraulique (2) à un réservoir (3) à pression ambiante,
- dans une troisième configuration, relier l'admission (21) dudit appareil hydraulique (2) au distributeur d'alimentation (8) et le refoulement (22) dudit appareil hydraulique (2) audit distributeur d'alimentation (8).

8. Procédé de pilotage d'un appareil hydraulique à pistons radiaux, ledit procédé comprenant les étapes suivantes :
- mise de l'admission (E1) de l'appareil hydraulique à une première pression,
- exécution d'une temporisation (E2) correspondant à une portion de tour dudit appareil hydraulique,
- mise du refoulement (E3) de l'appareil hydraulique à une seconde pression, égale à ladite première pression, et
- mise de l'admission et du refoulement (E4) de l'appareil hydraulique à des pressions distinctes.

9. Procédé selon la revendication 8, dans lequel, pour un appareil hydraulique comprenant un rotor et une came présentant n sommets, ladite temporisation est adaptée pour permettre la sortie de l'ensemble des pistons de leurs logements.

## Patentansprüche

1. Hydraulikkreislauf, enthaltend:
- eine Hochdruckleitung (HP) und eine Niederdruckleitung (BP), wobei der Druck in der Hochdruckleitung (HP) höher als der Druck in der Niederdruckleitung (BP) ist,
- ein hydraulisches Gerät (2), das zwei Öffnungen (21, 22) aufweist, die dazu geeignet sind, mit der Hochdruck- (HP) bzw. Niederdruckleitung (BP) verbunden zu werden, wobei eine erste (21) der Öffnungen eine Saugöffnung für Hydraulikflüssigkeit ist und die zweite (22) der Öffnungen eine Drucköffnung für Hydraulikflüssigkeit ist
- sequentielle Verbindungsmittel (4, 5, 8, 9), die dazu geeignet sind, die Öffnungen (21, 22) des hydraulischen Geräts (2) sequentiell mit der Hochdruck- (HP) bzw. Niederdruckleitung (BP) zu verbinden,
wobei der Kreislauf **dadurch gekennzeichnet ist, dass** er ferner eine Steuerleitung (PP) enthält, deren Druck geringer als der Druck in der Niederdruckleitung (BP) ist, wobei die Verbindungsmittel (4, 5, 8, 9) auch dazu geeignet sind, die Öffnungen (21, 22) des hydraulischen Geräts (2) selektiv mit der Steuerleitung (PP) zu verbinden.

2. Kreislauf nach Anspruch 1, ferner enthaltend einen Tank (3) unter Umgebungsdruck, wobei die Verbindungsmittel (4, 5, 8, 9) zumindest ein Selektionsventil aufweisen, das dazu geeignet ist, die Saug- (21) und die Drucköffnung (22) des hydraulischen Geräts (2) selektiv
- mit der Hochdruck- (HP) und der Niederdruckleitung (BP),
- mit dem Tank (3)
zu verbinden.

3. Kreislauf nach einem der Ansprüche 1 oder 2, wobei das hydraulische Gerät (2) ein hydraulisches Gerät mit Radialkolben ist, wobei die sequentiellen Verbindungsmittel (4, 5, 8, 9) zumindest einen Verteiler (4, 9) aufweisen, der dazu geeignet ist, bei einer ersten Verlagerung die Saugseite (21) des hydraulischen Geräts (2) mit der Hochdruckleitung (HP) zu verbinden und bei einer zweiten Verlagerung die Druckseite (22) des hydraulischen Geräts (2) mit der Niederdruckleitung (BP) zu verbinden.

4. Kreislauf nach einem der Ansprüche 1 bis 3, wobei die Hochdruck- (HP) und die Niederdruckleitung (BP) mit der Druckseite bzw. der Saugseite einer hydraulischen Pumpe (1) verbunden sind und die Steuerleitung (PP) über eine Steuerpumpe (7) versorgt wird, wobei die Verbindungsmittel enthalten:
- Verbindungsmittel für das hydraulische Gerät (4, 5, 9), und
- einen Versorgungsverteiler (8),
wobei der Versorgungsverteiler (8) dazu geeignet ist, die Steuerpumpe (7) bzw. die Saugseite und die Druckseite der hydraulischen Pumpe (1) selektiv mit den Verbindungsmitteln für das hydraulische Gerät zu verbinden,
wobei die Verbindungsmittel für das hydraulische Gerät (4, 59) dazu geeignet sind, die Saugseite (21) und die Druckseite (22) des hydraulischen Geräts (2) selektiv mit dem Versorgungsverteiler (8) bzw. mit einem Tank (3) unter Umgebungsdruck zu verbinden.

5. Kreislauf nach einem der Ansprüche 1 bis 3, wobei die Hochdruckleitung (HP) mit einem Hochdruckspeicher (13) verbunden ist und die Niederdruckleitung (BP) mit einem Niederdruckspeicher (14) verbunden ist, und die Steuerleitung (PP) über einen Steuerspeicher (17) versorgt wird, wobei die Verbindungsmittel enthalten:
- Verbindungsmittel zum Verbinden des hydraulischen Geräts (4, 5, 9), und
- einen Versorgungsverteiler (8),
wobei der Versorgungsverteiler (8) dazu geeignet ist, den Hochdruckspeicher (13) und den Niederdruckspeicher (14) bzw. den Steuerspeicher (17) mit den Verbindungsmitteln zum Verbinden des hydraulischen Geräts (4, 5, 9) zu verbinden,
wobei die Verbindungsmittel für das hydraulische Gerät (4, 59) dazu geeignet sind, die Saugseite (21) und die Druckseite (22) des hydraulischen Geräts (2) selektiv mit dem Versorgungsverteiler (8) bzw. mit einem Tank (3) unter Umgebungsdruck zu verbinden.

6. Kreislauf nach einem der Ansprüche 4 oder 5, wobei die Verbindungsmittel für das hydraulische Gerät einen ersten Verteiler (4) und einen zweiten Verteiler (5) aufweisen,
- wobei der erste Verteiler (4) dazu geeignet ist, in einer ersten Ausgestaltung die Saugseite (21) des hydraulischen Geräts (2) mit einem Tank (3) unter Umgebungsdruck zu verbinden, und in einer zweiten Ausgestaltung die Saugseite (21) des hydraulischen Geräts (2) mit dem Versorgungsverteiler (8) zu verbinden,
- wobei der zweite Verteiler (5) dazu geeignet ist, in einer ersten Ausgestaltung die Druckseite (22) des hydraulischen Geräts (2) mit einem Tank (3) unter Umgebungsdruck zu verbinden, und in einer zweiten Ausgestaltung die Druckseite (22) des hydraulischen Geräts (2) mit dem Versorgungsverteiler (8) zu verbinden.

7. Kreislauf nach einem der Ansprüche 4 oder 5, wobei die Verbindungsmittel einen Verteiler (9) aufweisen, der dazu geeignet ist,
- in einer ersten Ausgestaltung die Saugseite (21) und die Druckseite (22) des hydraulischen Geräts (2) mit einem Tank (3) unter Umgebungsdruck zu verbinden,
- in einer zweiten Ausgestaltung die Saugseite (21) des hydraulischen Geräts (2) mit dem Versorgungsverteiler (8) zu verbinden und die Druckseite (22) des hydraulischen Geräts (2) mit einem Tank (3) unter Umgebungsdruck zu verbinden,
- in einer dritten Ausgestaltung die Saugseite (21) des hydraulischen Geräts (2) mit dem Versorgungsverteiler (8) zu verbinden und die Druckseite (22) des hydraulischen Geräts (2) mit dem Versorgungsverteiler (8) zu verbinden.

8. Verfahren zum Steuern eines hydraulischen Geräts mit Radialkolben, wobei das Verfahren die nachfolgenden Schritte umfasst.
- Anlegen (E1) eines ersten Drucks an die Saugseite des hydraulischen Geräts,
- Durchführen (E2) einer Verzögerung, die einem Umdrehungsabschnitt des hydraulischen Geräts entspricht,
- Anlegen (E3) eines zweiten Drucks an die Druckseite des hydraulischen Geräts, der gleich dem ersten Druck ist, und
- Anlegen (E4) unterschiedlicher Druckwerte an die Saugseite und an die Druckseite des hydraulischen Geräts.

9. Verfahren nach Anspruch 8, wobei bei einem hydraulischen Gerät mit einem Rotor und einem Nocken mit n Vorsprüngen die Verzögerung so abgestimmt ist, dass sie den Austritt sämtlicher Kolben aus ihren Aufnahmeausnehmungen gestattet.

## Claims

1. A hydraulic circuit including:
- a high pressure line (HP) and a low pressure line (BP), the pressure in said high pressure line (HP) being greater than the pressure in said low pressure line (BP),
- a hydraulic machine (2) having two ports (21, 22) designed to be connected to said high pressure (HP) and low pressure (BP) lines, a first (21) of said ports being a hydraulic fluid intake port and the second (22) of said ports being a hydraulic fluid discharge port,
- sequential connection means (4, 5, 8, 9) designed to sequentially connect said ports (21, 22) of the hydraulic machine (2) to said high pressure (HP) and low pressure (BP) lines,
said circuit being **characterized in that** it further includes a control line (PP), the pressure whereof is lower than the pressure in the low pressure line (BP), the connection means (4, 5, 8, 9) being also designed to selectively connect said ports (21, 22) of said hydraulic machine (2) to the control line (PP).

2. The circuit according to claim 1, further including a reservoir (3) at ambient pressure, wherein said connection means (4, 5, 8, 9) include at least one selector valve designed to selectively connect said intake (21) and discharge (22) ports of said hydraulic machine (2)
- to the high pressure (HP) and low pressure (BP) lines,
- to the reservoir (3).

3. The circuit according to one of claims 1 or 2, wherein said hydraulic machine (2) is a radial piston hydraulic machine, and said sequential connection means (4, 5, 8, 9) include at least one distributor (4, 9) designed for, during a first movement, connecting the intake (21) of said hydraulic machine (2) to the high pressure line (HP) and, during a second movement, to connect the discharge (22) of said hydraulic machine (2) to the low pressure line (BP).

4. The circuit according to one of claims 1 to 3, wherein said high pressure (HP) and low pressure (BP) lines are connected respectively to the discharge and to the intake of a hydraulic pump (1) and the control line (PP) is fed by a control pump (7), said connection means including
- connection means (4, 5, 9) of the hydraulic machine, and
- an intake distributor (8),
the intake distributor (8) being designed to selectively connect the control pump (7) or the intake and the discharge of the hydraulic pump (1) to the connection means of the hydraulic machine,
said connection means of the hydraulic machine (4, 5, 9) being designed to selectively connect the intake (21) and the discharge (22) of said hydraulic machine (2) to the intake distributor (8) or to a reservoir (3) at ambient pressure.

5. The circuit according to one of claims 1 to 3, wherein said high pressure line (HP) is connected to a high pressure accumulator (13) and said low pressure line (BP) is connected to a low pressure accumulator (14), and the control line (PP) is fed by a control accumulator (17), said connection means including
- connection means (4, 5, 9) of the hydraulic machine, and
- an intake distributor (8),
the intake distributor (8) being designed to selectively connect said high pressure (13) and low pressure (14) accumulators or the control accumulator (17) to the connection means (4, 5, 9) of the hydraulic machine,
said connection means (4, 5, 9) of the hydraulic machine being designed to selectively connect the intake (21) and the discharge (22) of said hydraulic machine (2) to the intake distributor (8) or to a reservoir (3) at ambient pressure.

6. The circuit according to one of claims 4 or 5, wherein said connection means of the hydraulic machine include a first (4) and a second (5) distributor,
- said first distributor (4) being designed for, in a first configuration, connecting the intake (21) of the hydraulic machine (2) to a reservoir (3) at ambient pressure and, in a second configuration, for connecting the intake (21) of the hydraulic machine (2) to the intake distributor (8),
- said second distributor (5) being designed for, in a first configuration, connecting the discharge (22) of the hydraulic machine (2) to a reservoir (3) at ambient pressure and, in a second configuration, for connecting the discharge (22) of the hydraulic machine (2) to the intake distributor (8).

7. The hydraulic circuit according to one of claims 4 or 5, wherein said connection means include a distributor (9) designed,
- in a first configuration, to connect the intake (21) and the discharge (22) of said hydraulic machine (2) to a reservoir (3) at ambient pressure,
- in a second configuration, to connect the intake (21) of said hydraulic machine (2) to the intake distributor (8), and the discharge (22) of said hydraulic machine (2) to a reservoir (3) at ambient pressure,
- in a third configuration, to connect the intake (21) of said hydraulic machine (2) to the intake distributor (8) and the discharge (22) of said hydraulic machine (2) to said intake distributor (8).

8. A control method for a radial piston hydraulic machine, said method including the following steps:
- applying a first pressure to the intake (E1) of the hydraulic machine,
- executing a time delay (E2) corresponding to a portion of a revolution of said hydraulic machine,
- applying a second pressure, equal to said first pressure, to the discharge (E3) of the hydraulic machine, and
- applying distinct pressures to the intake land the discharge (E4) of the hydraulic machine.

9. The method according to claim 8, wherein, for a hydraulic machine including a rotor and a cam having n peaks, said time delay is designed to allow the emergence of all the pistons from their cavities.
